# EUROPEAN PATENT APPLICATION

(11) **EP 4 586 188 A1**
(43) Date of publication of application: **16.07.2025**
(21) Application number: 24151757.2
(22) Date of filing: 15.01.2024
(51) Int. Cl.: G06T 7/00

(54) **RIB OR VERTEBRAE FRACTURE DETECTION**

(71) Applicant: Koninklijke Philips N.V., 5656 AG Eindhoven (NL)
(72) Inventor: LOSSAU, Tanja, Eindhoven (NL); BUERGER, Christian, Eindhoven (NL); LORENZ, Cristian, 5656AG Eindhoven (NL); GOLLA, Alena-Kathrin, Eindhoven (NL); LAVES, Max-Heinrich Viktor, Eindhoven (NL); LIN, Qizhong, Eindhoven (NL); CHEN, Hongxin, Eindhoven (NL); KLINDER, Tobias, Eindhoven (NL)
(74) Representative: Philips Intellectual Property & Standards

(57) **Abstract**

Detection of rib or vertebrae fractures comprises receiving a three-dimensional image that includes a plurality of ribs or vertebrae, generating a reformatted image that is a normalized representation of the three-dimensional image, and identifying proposed fractures in the normalized representation. For each identified proposed fracture, a corresponding location is determined in the three-dimensional image, and a cropped patch of the three-dimensional image including the identified corresponding location is extracted. At least one verified fracture is identified in an extracted cropped patch corresponding to at least one of the proposed fractures.

## Description

### FIELD

The present invention generally relates to systems and methods for rib or vertebrae fracture detection. In particular, the invention relates to rib or vertebrae fracture detection using a two-step detection approach combining original and reformatted normalized Computed Tomography (CT) images.

### BACKGROUND

Automated rib or vertebrae fracture detection is in high demand, but is generally challenging. Any implementation must balance processing speed with accuracy, and systems processing images must manage large amounts of data against memory and processing power limitations.

CT images are frequently acquired for the purpose of identifying fractures in a patient's rib cage. As 24 individual ribs must be traced and each rib is spanning over multiple slices, manual inspection is tedious and time-consuming. Furthermore, reliable detection and diagnosis may be challenging depending on the type of fracture.

Because manual assessment of the spine is time consuming, various automated methodologies have been attempted in order to leverage imaging, such as CT scans. Accordingly, deep learning methods show high potential in image analysis tasks, including fracture detection. However, such methods suffer from a trade-off between input resolution and receptive field size due to memory and runtime constraints.

Accordingly, due to computational demands, a CT volume is usually processed in a patch-wise manner. Accordingly, individual segments of ribs or vertebrae may be evaluated in high resolution. However, by this approach, valuable global information (e.g., about adjacent fractures) is discarded and does not inform the methods evaluating the ribs.

Alternative approaches have been proposed in which CT image volumes are reformatted and, in some cases, normalized, in order to ease the task of the evaluation method. For example, in one such approach, a so-called fillet view provides an unfolded rib cage in a normalized way. Such visualizations allow doctors to review a patient's rib cage visually in an intuitive way, thereby simplifying human inspection.

Such an intuitive representation may similarly simplify automated inspection. Processing the scan in the reformatted fillet view is then fast and incorporates local and global information. However, such reformatting can introduce interpolation and transformation artifacts. Further, because the fillet view presents local and global information in low resolution relative to the high resolution cartesian image, accuracy may be reduced.

Such a low resolution implies that any machine learning or deep learning method based on such a reformatted fillet view should be tuned to generate false positives in questionable cases. However, the introduction of transformation artifacts, in contrast, implies that any machine learning or deep learning method evaluating the reformatted fillet view should be tuned to ignore ambiguous elements that appear similar to such artifacts in questionable cases.

There is, therefore, a need for a rib fracture detection system and method in which the processing efficiency advantages of processing a reformatted image are combined with the accuracy advantages of processing a full resolution cartesian CT image. There is a further need for such a system that can indicate a confidence level associated with identified fractures.

### SUMMARY

A method is provided for detecting rib fractures. Such a method leverages both original medical image data, such as a complete CT image volume, as well as a reformatted and normalized treatment of such a CT image volume, such as a reformatted fillet view.

In some embodiments, initial fracture proposals are generated on the reformatted normalized images. Any identified fracture proposals are then mapped to the original CT image volume. A fracture verification module subsequently classifies the proposals based on the high resolution cartesian CT image volume. By this two-step procedure, global information is evaluated in the context of the reformatted fillet view. Similarly, a spatial proposal arrangement is taken into account. Once fracture proposals are identified, the method assesses crucial image parts in high resolution.

In reviewing only relevant portions of the image volume in detail, such an approach reduces the overall runtime. Accordingly, the proposed approach combines high accuracy and low duration.

In some embodiments, the main components of this invention are a transformation module which takes a CT image as input and delivers the reformatted image as output, a fracture proposal module which takes a reformatted image as input and delivers fracture proposals (location information e.g. voxel mask and an associated fracture confidence score) as output, an inverse resampling module, which maps the proposals back to the original CT space, and a fracture verification module which takes the CT image and the fracture proposals as input and delivers a final fracture classification as output. As the result, the number of false positive predictions (e.g. originating from interpolation errors in the fillet view) is reduced, and proposal-wise classification/regression, e.g. with respect to fracture type or severity, is enabled. The output may be provided to a user by way of a standard console application or an advanced visualization workstation.

Given a novel CT case, the reformatted image volume is created via the transformation module. After inference using the fracture proposal module, the predicted fracture regions are mapped back on the cartesian grid of the original CT space by the inverse resampling module. Finally, the proposals are assessed by the fracture verification module and grouped into different categories such as "false positive", "buckle fracture," or "dislocated fracture."

In some embodiments, a method is provided for detecting rib or vertebrae fractures comprising receiving a three-dimensional image, the three-dimensional image including a plurality of ribs or vertebrae of a subject, generating a reformatted image, the reformatted image being a normalized representation of the three-dimensional image, and identifying a plurality of proposed fractures in the normalized representation. For each proposed fracture of the plurality of proposed fractures, the method then proceeds to identify a corresponding location in the three-dimensional image and extract a cropped patch of the three-dimensional image including the identified corresponding location. The method then identifies at least one verified fracture in an extracted cropped patch corresponding to at least one of the proposed fractures.

In some embodiments, the identification of a verified fracture is by assigning a fracture severity score or a fracture verification confidence score to each of the proposed fractures.

In some embodiments, the method includes assigning to each verified fracture a fracture category of a plurality of potential fracture categories. In some such embodiments, the plurality of potential fracture categories include buckle fracture and dislocated fracture.

In some embodiments, the method includes assigning to each verified fracture a fracture severity score or a fracture verification confidence score.

In some embodiments, the identification of the verified fracture is at least partially based on the location of the proposed fracture in the normalized representation.

In some embodiments, the identification of the plurality of proposed fractures is based on a fracture confidence score generated by a neural network applied to the normalized representation. An identified element is then defined as a proposed fracture if a corresponding fracture confidence score is above a predetermined threshold.

In some such embodiments, the identification of the verified fracture is at least partially based on the fracture confidence score corresponding to each proposed fracture of the plurality of proposed fractures.

In some embodiments, the reformatted image is an unfolded view of a rib cage. In some such embodiments, the reformatted image is a fillet view of the rib cage.

In some embodiments, the reformatted image is a straightened view of a spinal cord containing the vertebrae.

In some embodiments, the reformatted image is a two-dimensional image, a three-dimensional image, or a plurality of two-dimensional images arranged so as to provide image slices at a plurality of depths.

In some embodiments, the determination of the corresponding location in the three-dimensional image is based on a voxel mask generated from the normalized representation. In some such embodiments, the voxel mask comprises a unique identifier value corresponding to a specified proposed fracture. A plurality of cropped patches associated with different voxel masks may then contain at least some overlapping image content.

In some embodiments, the identification of a verified fracture is based on a neural network applied to the corresponding location, the cropped local patch, and a location of the proposed fracture in the normalized representation.

In some embodiments, the three-dimensional image is a CT image.

In some embodiments, a system is provided for detecting rib or vertebrae fractures. Such a system may include a memory for storing a plurality of instructions and at least one processor that couples with the memory and is configured to execute the instructions.

Such instructions may be to retrieve a three-dimensional image, the three-dimensional image including a plurality of ribs or vertebrae of a subject, generate a reformatted image, the reformatted image being a normalized representation of the three-dimensional image, and identify a plurality of proposed fractures in the normalized representation.

The instructions may then further provide for determining a corresponding location for each of plurality of proposed fractures in the three-dimensional image, extracting a cropped patch of the three-dimensional image including the corresponding location for each of the plurality of proposed fractures, and identifying a confirmed fracture or likely fracture in a cropped local patch corresponding to at least one of the proposed fractures.

### BRIEF DESCRIPTION OF THE DRAWINGS

Fig. 1 is a schematic diagram of a system according to one embodiment of the present invention.
Fig. 2 illustrates an exemplary imaging device according to one embodiment of the present invention.
Fig. 3A illustrates a three-dimensional image including a plurality of ribs and vertebrae.
Fig. 3B illustrates rib detection in a coronal, or vertical, slice of the three-dimensional image of Fig. 3A.
Fig. 3C illustrates rib detection in an axial, or horizontal, slice of the three-dimensional image of Fig. 3A.
Fig. 3D shows rib tracing and labeling in the context of a three-dimensional image.
Fig. 3E shows a curved sampling plane in the three-dimensional image of Fig. 3A.
Fig. 3F shows reformatting of the three-dimensional image of Fig. 3A with fracture proposals highlighted.
Fig. 4 illustrates rib or vertebrae fractures detection according to one embodiment of the present invention.
Fig. 5 is a flowchart illustrating a method for detecting rib or vertebrae fractures according to one embodiment of the present invention.
Fig. 6 illustrates the creation of a spine mask according to one embodiment of the present invention.
Fig. 7 illustrates the identification of volumes of interest (VOIs) according to one embodiment of the present invention.
Fig. 8 illustrates extracted VOIs identified in Fig. 7 straightened according to one embodiment of the present invention.

### DETAILED DESCRIPTION OF THE PREFERRED EMBODIMENTS

The description of illustrative embodiments according to principles of the present disclosure is intended to be read in connection with the accompanying drawings, which are to be considered part of the entire written description. In the description of embodiments of the disclosure disclosed herein, any reference to direction or orientation is merely intended for convenience of description and is not intended in any way to limit the scope of the present disclosure. Relative terms such as "lower," "upper," "horizontal," "vertical," "above," "below," "up," "down," "top" and "bottom" as well as derivative thereof (e.g., "horizontally," "downwardly," "upwardly," etc.) should be construed to refer to the orientation as then described or as shown in the drawing under discussion. These relative terms are for convenience of description only and do not require that the apparatus be constructed or operated in a particular orientation unless explicitly indicated as such. Terms such as "attached," "affixed," "connected," "coupled," "interconnected," and similar refer to a relationship wherein structures are secured or attached to one another either directly or indirectly through intervening structures, as well as both movable or rigid attachments or relationships, unless expressly described otherwise. Moreover, the features and benefits of the disclosure are illustrated by reference to the exemplified embodiments. Accordingly, the disclosure expressly should not be limited to such exemplary embodiments illustrating some possible non-limiting combination of features that may exist alone or in other combinations of features; the scope of the disclosure being defined by the claims appended hereto.

This disclosure describes the best mode or modes of practicing the disclosure as presently contemplated. This description is not intended to be understood in a limiting sense but provides an example of the disclosure presented solely for illustrative purposes by reference to the accompanying drawings to advise one of ordinary skill in the art of the advantages and construction of the disclosure. In the various views of the drawings, like reference characters designate like or similar parts.

It is important to note that the embodiments disclosed are only examples of the many advantageous uses of the innovative teachings herein. In general, statements made in the specification of the present application do not necessarily limit any of the various claimed disclosures. Moreover, some statements may apply to some inventive features but not to others. In general, unless otherwise indicated, singular elements may be in plural and vice versa with no loss of generality.

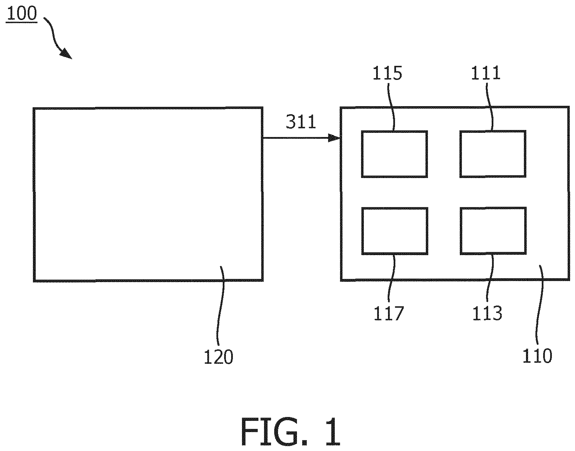

Fig. 1 is a schematic diagram of a system 100 according to one embodiment of the present disclosure. As shown, the system 100 typically includes a processing device (i.e., a processor) 110 and an imaging device (i.e., a scanner) 120.

The processing device 110 may apply processing routines to images or projection data received from the image device 120. The processing device 110 may include a memory 113 and processor circuitry 111. The memory 113 may store a plurality of instructions. The processor circuitry 111 may couple to the memory 113 and may be configured to execute the instructions. The instructions stored in the memory 113 may comprise processing routines, as well as data associated with processing routines, such as machine learning or deep learning algorithms, and various filters for processing images.

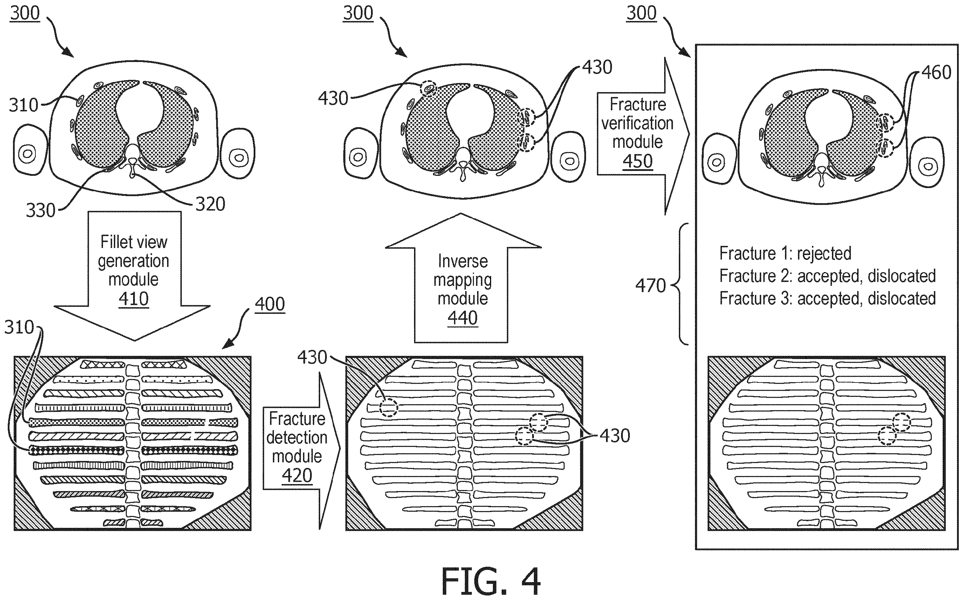

In some embodiments, resources within the processing device may be organized into software or hardware modules for use in implementing the methods described herein. Such modules may include, for example, a transformation module for reformatting a three-dimensional image, a fracture proposal module for identifying proposed fractures in a reformatted image generated by the transformation module, an inverse resampling module for mapping proposed fractures to the three-dimensional image, and a fracture verification module for evaluating proposed fractures. All such modules, where utilized in the context of the method, are assumed to be included in the broader scope of processor circuitry 111 or software stored in the memory 113 and executed using the processor circuitry 111. Such modules are discussed below in the context of Fig. 4.

The processing device 110 may further include an input 115 and an output 117. The input 115 may receive information including images or projection data from the imaging device 120. It is noted that while a CT imaging method is discussed herein, and while a CT scanning unit 200 is discussed in detail below, similar methods may be implemented using different forms of three-dimensional imaging, such as magnetic resonance imaging (MRI) or positron emission tomography (PET) imaging. The output 117 may output information, such as filtered images, converted two-dimensional images, or analytical results of an implementation of the methods described herein, to a user or a user interface device. The output may include a monitor or display.

In some embodiments, the processing device 110 may relate to the imaging device 120 directly. In alternate embodiments, the processing device 110 may be distinct from the imaging device 120, such that the processing device 110 receives images or projection data for processing by way of a network or other interface at the input 115.

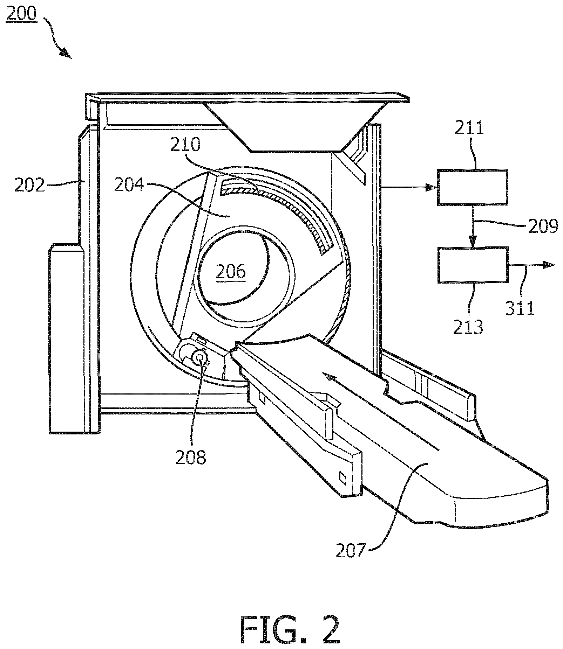

Fig. 2 illustrates an exemplary imaging device 200 according to one embodiment of the present disclosure. It will be understood that while a CT imaging device 200 is shown, and the following discussion is generally in the context of CT images, similar methods may be applied in the context of other imaging devices and images to which these methods may be applied in a wide variety of ways.

In an imaging device 200 in accordance with embodiments of the present disclosure, the CT scanning unit may be adapted for performing one or multiple axial scans and/or a helical scan of an object in order to generate the CT projection data. In an imaging device 200 in accordance with embodiments of the present disclosure, the CT scanning unit may comprise an energy-resolving photon counting or spectral dual-layer image detector. Spectral content may be acquired using other detector setups as well. The CT scanning unit may include a radiation source that emits radiation for traversing the object when acquiring the projection data.

In the example shown in Fig. 2, the CT scanning unit 200, e.g., the CT scanner, may include a stationary gantry 202 and a rotating gantry 204, which may be rotatably supported by the stationary gantry 202. The rotating gantry 204 may rotate about a longitudinal axis around an examination region 206 for the object when acquiring the projection data. The CT scanning unit 200 may include a support 207 to support the patient in the examination region 206 and configured to pass the patient through the examination region during the imaging process.

The CT scanning unit 200 may include a radiation source 208, such as an X-ray tube, which may be supported by and configured to rotate with the rotating gantry 204. The radiation source 208 may include an anode and a cathode. A source voltage applied across the anode and the cathode may accelerate electrons from the cathode to the anode. The electron flow may provide a current flow from the cathode to the anode, such as to produce radiation for traversing the examination region 206.

The CT scanning unit 200 may comprise a detector 210. The detector 210 may subtend an angular arc opposite the examination region 206 relative to the radiation source 208. The detector 210 may include a one- or two-dimensional array of pixels used in direct conversion or indirect conversion of X-rays to electrical signals. The detector 210 may be adapted for detecting radiation traversing the examination region 206 and for generating a signal indicative of an energy thereof.

The CT scanning unit 200 may include generators 211 and 213. The generator 211 may generate projection data 209 based on the signal from the detector 210. The generator 213 may receive the projection data 209 and, in some embodiments, generate three-dimensional CT images 311 of the object based on the projection data 209. In some embodiments, the projection data 209 may be provided to the input 115 of the processing device 110, while in other embodiments the CT images 311 are provided to the input 115 of the processing device 110.

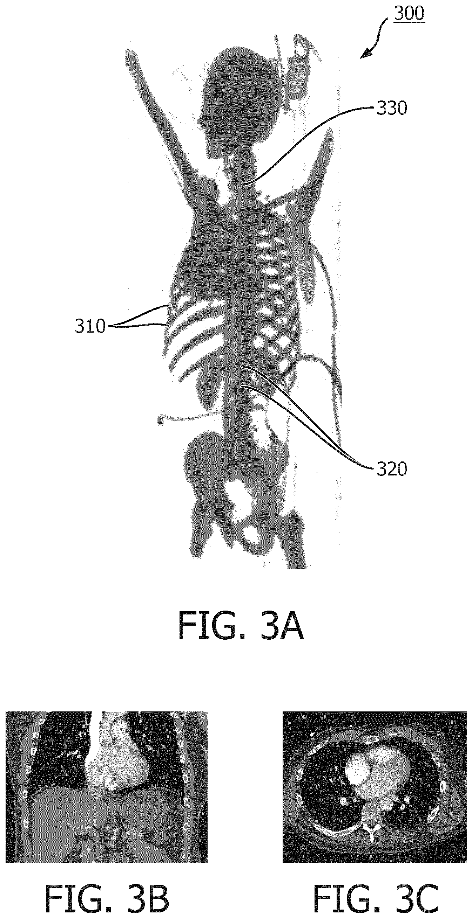

Fig. 3A illustrates a three-dimensional image 300 including a plurality of ribs 310 and vertebrae 320. Such a three-dimensional image 300 may be the output of the CT scanning unit 200 discussed above.

Fig. 3B illustrates rib detection in a coronal, or vertical, slice of the three-dimensional image 300 of Fig. 3A. Fig. 3C illustrates rib detection in an axial, or horizontal, slice of the three-dimensional image 300. Accordingly, individual ribs 310 can be identified in the three-dimensional image 300.

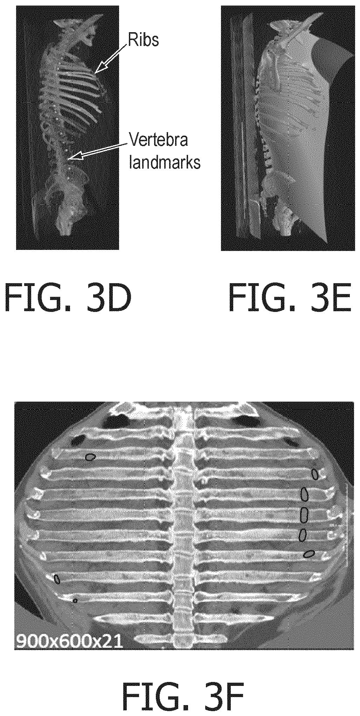

Fig. 3D shows rib tracing and labeling in the context of a three-dimensional image 300. As shown, individual ribs 310 can be identified as 1L and 1R through 12L and 12R. Fig. 3E shows a curved sampling plane in the three-dimensional image 300 of Fig. 3A. Such a plane can be defined using thin-plate spline sampling techniques. This information can then be used to reformat the three-dimensional image 300 to create reformatted image 400 (Fig. 4), discussed in more detail below. Accordingly, Fig. 3F shows reformatting of the three-dimensional image 300.

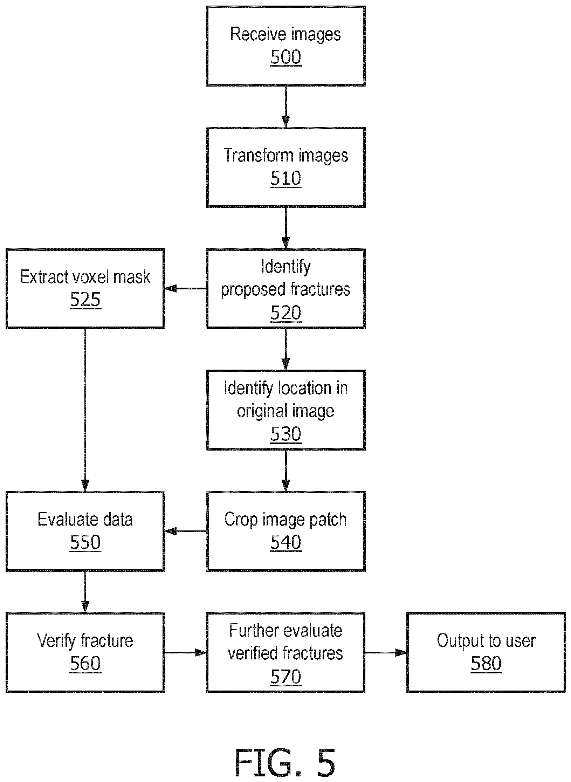

Fig. 4 schematically illustrates rib 310 or vertebrae 320 fractures detection according to one embodiment of the present disclosure. Fig. 5 is a flowchart illustrating a method for detecting rib or vertebrae fractures according to one embodiment of the present disclosure.

As shown in Fig. 5, the method for detecting rib or vertebrae fractures includes receiving three-dimensional images (500), such as three-dimensional CT images. The three-dimensional images comprise reconstructed projection data acquired from a plurality of angles about a central axis.

Accordingly, in the context of the imaging device 200 of Fig. 2, the subject may be a patient on the support 20, and the three-dimensional image 300 may then comprise CT image 311. Where the three-dimensional CT image 311 is generated by the imaging device 200, the rotating gantry 204 may then rotate about a central axis of the subject, thereby acquiring the projection data from various angles.

The three-dimensional image 300 includes a plurality of ribs 310 and vertebrae 320 of a subject being analyzed. As discussed in more detail below, the method described herein relies on a combination of contextual data, such as the relationship between adjacent body parts, such as ribs or vertebrae, and local data, such as high-resolution patches of original quality imaging data. Accordingly, while the three-dimensional image 300 includes a plurality of ribs 310 and a plurality of vertebrae 320, it is understood that different embodiments may evaluate different body parts. As such, an embodiment for evaluating the subject's ribs for fractures may include a plurality of ribs 310 but not vertebrae 320, and may be evaluated as shown in the context of Fig. 4. Alternatively, an embodiment for evaluating the subject's spine 330 may include a plurality of vertebrae 320 but not ribs 310. Similarly, while the embodiment shown in Figs 3A-3F includes the entirety of the subject's rib cage, some embodiments may have less complete data and may include only a plurality of ribs (or vertebrae) or may include partial ribs (or vertebrae). Similar techniques may be applied to other groupings of bones or other anatomical elements positioned relative to each other in a predictable manner, such as hands and feet.

It is understood that while the method is initially discussed in the context of ribs 310, similar methods can be applied in other contexts, and a second example of the evaluation of vertebrae 320 of the subject is discussed below. The method may then proceed to generate (510) a reformatted image 400 presenting the ribs 310 in a manner different than presented in the original three-dimensional image 300. Such a transformation may be implemented by a transformation module 410 for reformatting the three-dimensional image 300. The transformation module 410 may then take a CT, or other three-dimensional image 300 as input, and deliver a reformatted image 400 as output.

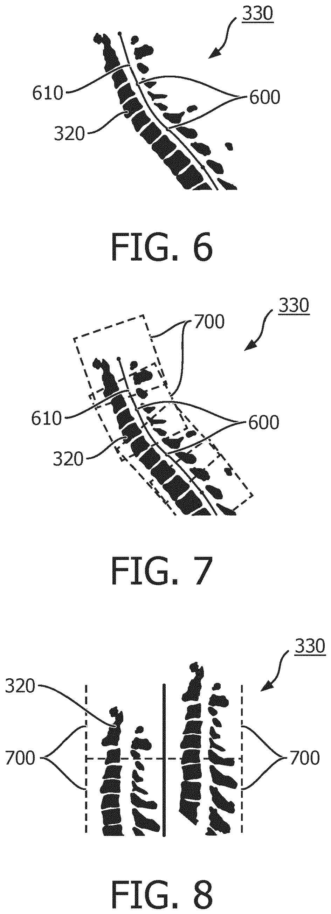

The transformation (generated at 510) may then include the unwrapping or otherwise transforming the subject's rib cage as a way of normalizing the ribs 310 and/or the identification of the spine 330 of the subject in the three-dimensional images as a way to straighten and normalize the subject's vertebrae. Such image processing may be done in a number of ways, but potential approaches are shown in Figs 3A-3F and 4 for a subject's ribs 310 and Figs 6-8 for normalizing a subject's spine.

As shown in Fig. 4, the reformatted image 400 is a normalized representation of the three-dimensional image 300. When discussing normalized representations in this disclosure, it is intended that such representations include some transformation (generated at 510) of the underlying three-dimensional image 300 to conform to some expected characteristics. For example, in Fig. 4, the three-dimensional image 300 is transformed to a fillet view 400 of the rib cage. The fillet view 400 shows each rib 310 unfolded and represented in an expected location and with an expected length and relationship with respect to other ribs 310.

In other words, normalization in this context refers to forcing an anatomical structure to conform to a corresponding representative anatomical structure. This may be by utilizing a standardized model of the representative anatomical structure. One example of such a model is a fillet view of a rib cage, as shown in Fig. 3F, and one approach to the creation of such a fillet view is illustrated in Figs 3A-3F.

Another example is a straightened spine, as shown in Fig. 8, and one approach to creating such a straightened spine is illustrated in Figs 6-8.

The normalized representation 400 may itself be a three-dimensional image, or it may be a two-dimensional image or a plurality of two-dimensional images arranged so as to provide image slices at a plurality of depths. As such, the normalized representation 400 may be a pseudo-three-dimensional image.

Such a normalized representation 400 allows for a presentation of relevant data from the three-dimensional image 300 in a contextual manner that is less data intensive than processing the entirety of the original image at once. The evaluation of a subject's anatomy in the context of an expected anatomy thereby allows for an accelerated and more time and computation efficient evaluation of data from the three-dimensional image 300 by an appropriately trained model.

The method then proceeds to identify (520) a plurality of proposed fractures in the normalized representation 400. Such an identification process may be implemented using a fracture proposal module 420 (Fig. 4), which may apply a model trained on comparable normalized representations. Accordingly, the fracture proposal module 420 may implement a machine learning or deep learning algorithm, such as a convolutional neural network (CNN) in order to identify potential fractures 430 in the reformatted image 400. The fracture proposal module 420 may be a software module designed to take the reformatted image 400 as input and deliver fracture proposals 430 in various forms. For example, the fracture proposal module 420 may return location information, such as a voxel mask, and an associated fracture confidence score for each proposed fracture 430. Accordingly, for any element identified in the normalized representation for evaluation, the CNN may generate a fracture confidence score.

In some embodiments, the fracture proposal module 420 may return a desired number n of proposed fractures 430 for any given normalized representation. Accordingly, after assignment of the fracture confidence score to each identified element, the method may define the top n identified elements ranked by the fracture confidence score as proposed fractures. Alternatively, the fracture proposal module may be tunable by selecting a threshold of the fracture confidence score. In this way, the fracture proposal module 420 can be tuned to return more or fewer proposed fractures 430 by increasing or decreasing the threshold value used to evaluate whether a particular image element should be returned as a proposed fracture. In the context of the method, the fracture proposal module 420 would typically be tuned to include borderline cases, thereby returning false positives rather than promoting false negatives.

Accordingly, the fracture proposal module 420 may be tuned by lowering a threshold of the fracture confidence score. Allowing proposals with only higher scores would reduce computational efforts and duration but would increase the chance of missing real fractures.

Following the identification of proposed fractures 430 (at 520), the identified proposed fractures are inverse transformed (525) back into the three-dimensional image 300. Such a transformation may be implemented by an inverse resampling module 440 configured to map identified locations between the three-dimensional image 300 and the normalized representation 400. Accordingly, the inverse resampling module may map the proposals back to the original CT space. This is typically by identification of a location in the three-dimensional image 300 corresponding to the proposed fracture 430 in the normalized representation 400 by utilizing a voxel mask.

Accordingly, for each proposed fracture 430 (at 520), a corresponding location in the three-dimensional image 300 is identified (at 530). The method then proceeds to extract (540) a cropped patch of the three-dimensional image 300 including the identified corresponding location for each proposed fracture 430.

The determination of the corresponding location in the three-dimensional image 300 (at 520) may be based on a voxel mask generated or extracted (525) from the normalized representation 400. The voxel mask generated for a particular proposed fracture 430 may include a unique identifier value corresponding to a specified proposed fracture. Each cropped patch (extracted at 540) may then be associated with a different voxel mask. In some embodiments, such as where proposed fractures 430 are adjacent in the normalized representation or the three-dimensional image, the corresponding voxel masks may contain at least some overlapping image content.

The method then proceeds to evaluate (550) each cropped patch to attempt to verify (560) the corresponding proposed fracture. Such evaluation and verification may be implemented at a fracture verification module 450. This evaluation may be implemented iteratively following the extraction of each individual cropped patch (at 540), or it may be performed as a batch following the extraction of cropped patches for each of the proposed fractures 430.

In either implementation, the fracture verification module 450 takes the three-dimensional image 300, such as the CT image, and the fracture proposals 430 as input and delivers a final fracture classification as output. This module allows one to reduce the number of false positive predictions (e.g., originating from interpolation errors in the normalized representation 400) and furthermore enables proposal-wise classification/regression, e.g., with respect to fracture type or severity.

The evaluation of each cropped patch (at 570) may evaluate the corresponding proposed fracture 430 along several dimensions. Accordingly, the evaluation may assess a fracture confidence score associated with the proposed fracture 430 in order to determine whether the proposed fracture is indeed a fracture. Accordingly, the method may assign a fracture verification confidence score to each of the proposed fractures and utilize such a fracture confidence score for verification. Alternatively, the method may utilize the fracture confidence score provided to the fracture verification module with a corresponding proposed fracture 430. Alternatively, or in addition, the evaluation of each cropped patch (at 570) may evaluate the severity of a corresponding proposed fracture 430, such that the method may assign a fracture severity score.

The method may, in some embodiments, verify (at 560) only a subset of the proposed fractures (identified at 540), such that the subset resulting following verification is at least one verified fracture in an extracted cropped patch corresponding to a proposed fracture which may then be returned to a user of the method. The verification process results in fewer verified fractures 460 than proposed fractures 430. The method may then return the verified fracture or fractures 460 to the user.

The verification process may be directly based on the generated fracture verification confidence score or fracture severity score. Accordingly, in some embodiments, a predetermined number n of proposed fractures 430 may be expected to be verified, and as such, the method may verify the top n proposed fractures 430 as ranked by the fracture verification confidence score or fracture severity score. Alternatively, the verification may be based on a threshold value for a corresponding score. Accordingly, following the assignment of one or both of the fracture verification confidence score and the fracture severity score, the method may determine which proposed fractures 430 have a corresponding score higher than the threshold value. Typically, if the fracture verification module is confident that a particular proposal is a false positive, the module may assign a fracture severity score of 0.

Alternatively, one or both of the fracture verification confidence score and the fracture severity score may be utilized in the generation of a more generalized metric that can be used to rank the corresponding proposed fractures 430. The verification of fractures may then be based on the more generalized metric.

In some embodiments, the fracture confidence score may be received from the fracture proposal module 420, such that each proposed fracture 430 is provided to the fracture verification module 450 with a corresponding fracture confidence score. In such an embodiment, the fracture verification module 450 may rely on the provided fracture confidence score directly or may include it as a weighted factor in the generation of the distinct fracture verification confidence score or the more generalized metric indicated above. Typically, the fracture verification module 450 is a software module that implements machine learning or deep learning algorithms, such as a CNN, to evaluate the proposed fractures.

In some embodiments, a location of the proposed fracture 430 in the normalized representation 400 is provided to the fracture verification module 450 with the corresponding proposed fracture. In such an embodiment, the location may be utilized by a neural network applied by the fracture verification module 450 as part of the evaluation process (at 570).

Accordingly, in various embodiments, different sets of data may be provided to the fracture verification module 450 for use in evaluation (at 570). The fracture verification module 450 may then utilize any data provided to generate a corresponding metric. In some examples, the verification of the fracture 460 may be based on a neural network applied to the corresponding location, the cropped local patch, and a location of the proposed fracture 430 in the normalized representation.

Accordingly, the warped proposal location, i.e., in cartesian space, may be used to crop a local patch around the potential fracture in high resolution from the original volume. The associated patch comprising the voxel-wise proposal mask may be cropped as well, and provided as a separate input channel to the fracture verification module. Alternatively, the proposal mask may be transformed back into the original image geometry. In such an embodiment, the proposal mask in the original image geometry could be provided as an additional input to the verification module.

Where the normalized representation 400 is a fillet view of a rib cage, all coordinates in the fillet space are normalized. The second rib, for instance, always starts at a specific voxel location / height in the reformatted image 400. Accordingly, the proposal location in fillet space can be used by the fracture verification module 450 to bring the local patches into a global whole-rib-cage context. Incorporation of the position on the rib cage can be quite useful as irregular parts of the rib, e.g., the tuberculum costae or the sternal rib end may otherwise be misinterpreted as buckle or displaced fractures. The first and last ribs in particular have a specific and distinct appearance. The proposal location in fillet space may therefore be separately provided as vector input to the fracture verification module.

It will be understood that for any defined set of data provided to the fracture verification module, the corresponding module would previously have been trained on an appropriate training set in which a similar set of data was available. For example, the fracture verification module may be trained in a data-driven way based on a set of annotated CT scans.

In some embodiments, further evaluation (570) of the verified fractures 460 may be implemented. Accordingly, in some embodiments, the method may proceed to assign to each verified fracture 460 a fracture category 470 which may be selected from a plurality of potential fracture categories. For example, the method may determine that a particular verified fracture is a buckle fracture, a dislocated fracture, or a nondisplaced fracture, as well as a false positive. Similarly, in some embodiments, following the verification of a fracture, each verified fracture 460 may be assigned a fracture severity score or a fracture verification confidence score. Such a score may be incorporated into a report or data presentation provided to a user at the output 117 (595).

Generally, the outputs described herein could be provided as part of a console application or as part of an advanced visualization workstation.

In some embodiments the fracture confidence score tries to give an intuition as to how likely proposals are associated with real fractures. For example, if there are proposals with high fracture confidence scores on two ribs separated by single rib, it is likely that the middle rib is similarly fractured. Accordingly, the fracture confidence scores may be provided as scalar input to the fracture verification module.

In some embodiments, the fracture verification module 450 may evaluate each proposed fracture 430 independently. Alternatively, in some embodiments, the fracture verification module 450 may evaluate a fixed or variable number of proposals together. For example, when evaluating a specified proposed fracture 430, the fracture verification module 450 may take as input a current proposal being evaluated along with the two closest adjacent proposals. Alternatively, the fracture verification module may take a complete list of proposals generated by the fracture proposal module 420. The approach taken in a particular implementation may also drive a choice of learning algorithm utilized in the fracture verification module. For example, where a fixed number of proposals is taken as input, a simple convolutional network (CNN) would work well, while a variable number of inputs may generate better results using a more advanced network, such as a point cloud or graph neural network architecture.

In some embodiments, feature vectors may be extracted from the fracture proposals by an initial CNN before providing such data to the fracture verification module. In this way, a large number of proposals can be more easily processed simultaneously.

In another embodiment, a specific logic is implemented to build a proposal graph such as "each proposal is connected to the closest fractures on the same and the adjacent ribs" instead of simply connecting all proposals with each other in the graph structure. This becomes relevant when performing fracture verification using a graph convolutional network.

As noted above, in addition to application of the method described herein to rib cages, the method may similarly be applied to other body parts, such as vertebrae 320 of a subject's spine 330.

The three-dimensional image 300 shown in Fig. 3A may be used to segment the subject's spine 330. Fig. 6 illustrates the creation of a spine mask according to one embodiment of the present disclosure. Fig. 7 illustrates the identification of volumes of interest (VOIs) according to one embodiment of the present disclosure. Fig. 8 illustrates extracted VOIs identified in Fig. 7 straightened according to one embodiment of the present disclosure.

As shown in Fig. 6, a set of points 600 are defined along a centerline of the spine 330, and the set of points is then traced to define a spline 610 approximating local curvature along the spine 330 of the subject. In the embodiment shown, such a spline 610 is based on the points 600 defined along the centerline, and therefore corresponds directly to, e.g., a spinal canal. However, it will be understood that the spline may be defined in other ways as well, so long as it approximates local curvature.

Once the spline 610 is defined, the method proceeds to define a plurality of volumes of interest (VOIs) 700 as shown in Fig. 7. Each such VOI 700 contains at least a portion of a vertebra of the spine of the subject, and each VOI is defined relative to an adjacent segment of the spline 610.

In the embodiment shown, each VOI 700 is centered on a point 600 sampled as part of the definition of the centerline. The points 600 may then be sampled at regular intervals along the spline 610. In some embodiments, sampled points 600 used to define the spline 610 may be used, as shown in Fig. 7.

As shown in Fig. 7, when defining each VOI 700, the corresponding VOI is formed about the corresponding center point 600 and may be oriented based on a tangent of the spline 610 adjacent the corresponding center point. In this way, the orientation of each VOI may correspond to the local curvature of the spine.

In some embodiments, after defining each VOI 700, each VOI is then extracted and resampled from the three-dimensional image 300 to a target resolution. The target resolution may be a resolution in which algorithms designed for proposing fractures operate. As noted above, the orientation of the VOI 700 may be based on the local curvature of the spline 610. Accordingly, in resampling the VOI, the volume may be rotated, so that all processing may be better aligned with the local tangent vector of the spline 610.

Fig. 8 shows the extracted VOIs 700 as identified in Fig. 7. As shown, each VOI 700 has now been resampled and oriented so that they are aligned with the tangent of the spline 600 at the center of the VOI.

In this manner, the fracture proposal module may operate on a normalized view of the spine, where the normalization involves reformatting the image such that the spine is straightened and such that VOIs 700 are provided in an expected resolution. Other normalization processes are contemplated as well.

In addition to a subject's ribs 310 or vertebrae 320, other anatomies can be evaluated using a similar two-step process. For example, such a process could be used for metastasis detection or for general abnormality detection in various anatomies that are suitable for reformatting to normalized representations.

The methods according to the present disclosure may be implemented on a computer as a computer implemented method, or in dedicated hardware, or in a combination of both. Executable code for a method according to the present disclosure may be stored on a computer program product. Examples of computer program products include memory devices, optical storage devices, integrated circuits, servers, online software, etc. Preferably, the computer program product may include non-transitory program code stored on a computer readable medium for performing a method according to the present disclosure when said program product is executed on a computer. In an embodiment, the computer program may include computer program code adapted to perform all the steps of a method according to the present disclosure when the computer program is run on a computer. The computer program may be embodied on a computer readable medium.

While the present disclosure has been described at some length and with some particularity with respect to the several described embodiments, it is not intended that it should be limited to any such particulars or embodiments or any particular embodiment, but it is to be construed with references to the appended claims so as to provide the broadest possible interpretation of such claims in view of the prior art and, therefore, to effectively encompass the intended scope of the disclosure.

All examples and conditional language recited herein are intended for pedagogical purposes to aid the reader in understanding the principles of the disclosure and the concepts contributed by the inventor to furthering the art, and are to be construed as being without limitation to such specifically recited examples and conditions. Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

## Claims

1. A computer implemented method for detecting rib or vertebrae fractures, comprising:
receiving a three-dimensional image that includes a plurality of ribs or vertebrae;
generating a reformatted image that is a normalized representation of the three-dimensional image;
identifying a plurality of proposed fractures in the normalized representation;
for each identified proposed fracture of the plurality of proposed fractures:
determining a corresponding location in the three-dimensional image; and extracting a cropped patch of the three-dimensional image including the identified corresponding location, and
verifying a fracture in the extracted cropped patch corresponding to at least one of the proposed fractures.

2. The method of claim 1, wherein the identification of the plurality of proposed fractures in the normalized representation comprises assigning a fracture confidence score to each of the proposed fractures.

3. The method of claim 2, wherein the fracture confidence score is generated by a neural network applied to the normalized representation, wherein an identified element is defined as a proposed fracture if a corresponding confidence score is above a predetermined threshold.

4. The method of claim 1, wherein the verification of the fracture comprises assigning a fracture severity score or a fracture verification confidence score to each of the proposed fractures.

5. The method of claim 4, wherein the fracture severity score and/or the fracture verification confidence score is generated by a neural network.

6. The method of claim 1, further comprising assigning the verified fracture to a fracture category of a plurality of fracture categories.

7. The method of claim 1, wherein the verification of the fracture is at least partially based on a location of the proposed fracture in the normalized representation.

8. The method of claim 1, wherein the verification of the fracture is at least partially based on a fracture confidence score corresponding to each proposed fracture of the plurality of proposed fractures.

9. The method of claim 1, wherein the reformatted image is an unfolded view of a rib cage.

10. The method of claim 9, wherein the reformatted image is a fillet view of the rib cage.

11. The method of claim 1, wherein the reformatted image is a straightened view of a spinal cord containing the vertebrae.

12. The method of claim 1, wherein the determination of the corresponding location in the three-dimensional image is based on a voxel mask generated from the normalized representation.

13. The method of claim 12, wherein the voxel mask comprises a unique identifier value corresponding to a specified proposed fracture, and wherein a plurality of cropped patches associated with different voxel masks contain at least some overlapping image content.

14. A system for detecting rib or vertebrae fractures, comprising:
a memory for storing a plurality of instructions;
at least one processor that couples with the memory and is configured to execute the instructions to:
receive a three-dimensional image that includes a plurality of ribs or vertebrae;
generate a reformatted image that is a normalized representation of the three-dimensional image;
identify a plurality of proposed fractures in the normalized representation;
for each identified proposed fracture of the plurality of proposed fractures:
determine a corresponding location in the three-dimensional image; and
extract a cropped patch of the three-dimensional image including the identified corresponding location, and
verify a fracture in the extracted cropped patch corresponding to at least one of the proposed fractures.

15. A non-transitory computer-readable medium for storing executable instructions, which cause a method to be performed to detect rib or vertebrae fractures, the method comprising:
receiving a three-dimensional image that includes a plurality of ribs or vertebrae;
generating a reformatted image that is a normalized representation of the three-dimensional image;
identifying a plurality of proposed fractures in the normalized representation;
for each identified proposed fracture of the plurality of proposed fractures:
determining a corresponding location in the three-dimensional image; and extracting a cropped patch of the three-dimensional image including the identified corresponding location, and
verifying a fracture in the extracted cropped patch corresponding to at least one of the proposed fractures.
